# EUROPÄISCHE PATENTSCHRIFT

(11) **EP 2 171 179 B1**
(45) Veröffentlichungstag und Bekanntmachung des Hinweises auf die Patenterteilung: **16.07.2014**
(21) Anmeldenummer: 09716239.0
(22) Anmeldetag: 20.02.2009
(51) Int. Cl.: E04H 12/22, E02D 5/80, F24J 2/52

(54) **BOHRFUNDAMENT**
FOUNDATION DRILLER
FONDATION FORÉE

(30) Priorität: 29.02.2008 DE 102008011869; 08.05.2008 DE 102008022458; 30.05.2008 DE 102008026215
(43) Veröffentlichungstag der Anmeldung: 07.04.2010
(73) Patentinhaber: Kellner, Peter, 36269 Philippsthal (DE)
(72) Erfinder: Kellner, Peter, 36269 Philippsthal (DE)
(74) Vertreter: Liedtke, Markus
(86) Internationale Anmeldenummer: PCT/EP2009/052091
(87) Internationale Veröffentlichungsnummer: WO 2009/109474

(56) Entgegenhaltungen:
- WO-A-91/13225
- WO-A-2007/036263
- DE-U1- 20 000 183
- DE-U1-202007 004 564
- GB-A- 2 360 809
- US-A- 1 883 477

## Beschreibung

Die Erfindung betrifft ein Bohrfundament zum Verankern von Bauteilen im Erdboden, welches einen Grundkörper mit mindestens einem zylindrischen Bereich und mindestens eine Vortrieb erzeugende Schneidschaufel aufweist.

Die Erfindung ist für die Bodenverankerung unterschiedlicher Bauteile einsetzbar. Dies können beispielsweise Verkehrszeichen, Werbeflächen, Solaranlagen, Wintergärten, Sendemaste sowie eine Vielzahl weiterer Bauteile sein. Die Erfindung ermöglicht es, flexibel und ohne großen technischen Aufwand eine Verankerung im Erdboden zu befestigen.

Es sind mehrere Ausführungsformen solcher Bohrfundamente bekannt. Ein in DE 198 36 370 C2 beschriebenes Bohrfundament weist an seinem erdseitigen Ende ein konisches Element auf, an dem ein schraubenähnliches Gewinde angebracht ist. Das konische Element geht an der der Befestigung von Pfostenelementen dienenden Seite in ein zylindrisches Element über, sodass Holzpfosten oder zylindrische Stahlrohre durch Einstecken in den zylindrischen Teil des Bohrfundaments mit diesem verbunden werden können.

Die bekannten Anordnungen sind mit einem Vortrieb erzeugenden Element versehen, das die Form einer schraubenförmig gebogenen Wendel besitzt. Nachteilig ist dabei, dass diese Ausführung beim Eindrehen in das Erdreich dieses auflockert, so dass nur eine begrenzte Sicherheit gegen Lockern und Herausdrehen besteht.

Aus GB 2 360 809 A ist einzudrehender Pfeiler bekannt, der drei zylindrische Abschnitte aufweist, wobei an mindestens einem zylindrischen Abschnitt eine Wendel mit einem abgebogenen Schneidansatz angebracht ist.

DE 200 00 183 U1 beschreibt einen in den Erdboden einschraubbaren Metalleinschraubdübel zur Aufnahme von Holz oder Metallpfosten, der ein mit Gewindegängen versehenes Unterteil aufweist. Der Metalleinschraubdübel hat im Wesentlichen die Form einer Schraube. Es handelt sich dabei um ein einteiliges Bauteil, das ganz im Boden versenkt werden kann. Eine Verwendung als Bohrfundament zur Aufnahme großer Lasten ist damit nicht möglich.

Ferner ist aus DE 20 2007 004 564 U1 eine Fundamenteinrichtung für im Erdreich zu verankernde Bauteile bekannt. Die Einrichtung besteht aus einer im Erdreich verankerbaren offenen Hülse, wobei die Hülse als Schraubhülse ausgebildet sein kann.

In WO 2007/036263 A1 ist ein Drehfundament beschrieben, das einen erdseitigen zylindrischen Bereich mit anschließendem konischen Bereich aufweist, wobei an dem konischen Bereich ein gewindeförmiger Wendel angebracht ist.

Weiter ist aus WO 91/13225 A ein einschraubbares Fundament bekannt, welches einen zylindrischen Körper aufweist, an dem eine Schneidwendel angebracht ist.

Aus DE 9314973 U1 ist ein Konstruktionselement mit einem kegelförmigen Bodenanker bekannt, wobei der Bodenanker im Bereich seines vorderen Endes ein Gewinde aufweist. Bei dem beschriebenen Bodenanker handelt es sich um ein einteiliges Bauteil, welches insgesamt als Gussteil oder aus Stahlblech hergestellt werden kann.

Der Erfindung liegt die Aufgabe zugrunde, ein Bohrfundament der eingangs genannten Art zu schaffen, mit dem eine hohe Sicherheit gen Lockern und Herausdrehen erreicht werden kann.

Erfindungsgemäß wird die Aufgabe mit einer Anordnung gelöst, welche die in Anspruch 1 angegebenen Merkmale enthält.

Vorteilhafte Ausgestaltungen sind in den Unteransprüchen angegeben.

Der Grundkörper enthält mindestens zwei zylindrische Bereiche mit unterschiedlichen Durchmessern, wobei der erdnähere Bereich einen geringeren Durchmesser aufweist und die mindestens eine Vortrieb erzeugende Schneidschaufel am erdnäheren Bereich angebracht ist und eine gleichmäßige Steigung aufweist.

Damit kann ein leichtes Eindrehen in das Erdreich erreicht werden, ohne dass der Boden aufgelockert wird und die Außenwand des Grundkörpers fest am Erdreich gepresst wird.

Eine gleichmäßige, konstante Steigung der Schneidschaufeln kann dadurch erreicht werden, dass diese durch Schmieden oder Gießen hergestellt werden.

Eine vorteilhafte Ausgestaltung sieht vor, dass die den Vortrieb erzeugende Schneidschaufel aus einer Mehrzahl von Einzelschaufeln besteht, die am Umfang des Bohrfundamentes angebracht sind. Die Einzelschaufeln können unterschiedliche Durchmesser und unterschiedliche Steigungen aufweisen, um eine Anpassung an unterschiedliche Bodenbeschaffenheiten zu ermöglichen. Ferner ist es möglich, dass die einzelnen Schneidschaufeln auf einer Gewindesteigung oder in einer Höhe nebeneinander angeordnet werden. Es ist auch möglich, diese Anbringungsmöglichkeiten zu kombinieren.

Bei einer weiteren vorteilhafte Ausführung ist die mindestens eine Vortrieb erzeugende Schneidschaufel an einer Hülse angebracht ist, welche lösbar mit dem Grundkörper des Bohrfundamentes verbunden ist. Damit kann in einfacher Weise eine Anpassung an unterschiedliche Bodenverhältnisse erfolgen.

Ferner ist es möglich, dass am oberen Bereich des Grundkörpers mindestens eine Zusatzschneidschaufel angebracht ist, wobei die Zusatzschneidschaufel einen größeren Außendurchmesser, aber die gleiche Steigung wie die am erdnäheren Bereich angebrachte Schneidschaufel aufweist. Die Zusatzschneidschaufel kann sowohl große horizontale als auch große vertikale Kräfte aufnehmen und damit hohe Belastungen der Aufbauten zulassen. Die Zusatzschneidschaufel kann aus einem Stück oder aus einzelnen Segmenten bestehen. Vorzugsweise besteht die Zusatzschneidschaufel aus Stahl. Sie kann jedoch auch aus Kunststoff, beispielsweise aus Polypropylen, bestehen.

Bei einer weiteren Ausführung besteht der Grundköper des Bohrfundamentes aus einem Rohr, an dem die Schneidschaufeln angebracht sind. Diese Ausführung ermöglicht ein besonders leichtes Einschrauben in das Erdreich, da hierbei im Rohrinneren das Material verbleiben kann, sodass beim Einschrauben des Bohrfundaments nur wenig Erdmaterial verdrängt werden muss. Es ist auch möglich an der unteren Stirnseite sägezahnartige Zacken anzubringen, um das Hereinschrauben zu unterstützen. Das Rohr enthält an seinem unteren Ende ein kegelstumpfförmiges Teilstück, sodass ein Teil des Erdreichs nach außen verdrängt und ein hoher radialer Anpressdruck erreicht wird, ohne dass das gesamte Material verdrängt werden muss.

Bei einer weiteren vorteilhaften Ausführung ist im Rohrinneren eine Hilfsstange angeordnet ist, welche am endseitigen Ende des Grundköpers lösbar befestigt ist und aus dem oberen Ende des Grundköpers herausragt. Damit kann das beim Eindrehen des Bohrfundamentes erforderliche Moment von dieser Hilfsstange aufgenommen und an den erdnahen Bereich des Grundkörpers übertragen werden. Damit gelingt es, das am Grundköper anliegende Drehmoment wesentlich zu verringern. Damit können Grundkörper mit geringerem Durchmesser und/oder geringerer Wandstärke verwendet werden, was erhebliche Kosteneinsparungen ermöglicht.

Eine bevorzugte Ausführung sieht vor, dass der Grundkörper drei zylindrische Bereiche mit unterschiedlichen Durchmessern enthält, wobei ein erdnächster Bereich den geringsten Durchmesser aufweist und die mindestens eine Vortrieb erzeugende Schneidschaufel am mittleren Bereich angebracht ist. Bei dieser Ausführung entsteht ein hoher radialer Druck zwischen Erdreich und Grundkörper. Die Ausführung gewährleistet deshalb eine hohe Belastung, bei verhältnismäßig leichtem Eindrehen.

Die Erfindung wird im Folgenden anhand eines Ausführungsbeispieles näher erläutert.

In den zugehörigen Zeichnungen zeigen:
- Figur 1: ein Bohrfundament, bei dem die Schneidschaufeln an einem Rohr angebracht sind,
- Figur 2A: eine Ausführung mit einer am mittleren zylindrischen Bereich angebrachten Schneidschaufel,
- Figur 2B: eine Ausführung mit einer am mittleren zylindrischen Bereich angebrachten Schneidschaufel mit wachsendem Durchmesser,
- Figur 3: eine am Grundkörper lösbar angebrachte Hülse, an der die Schneidschaufel befestigt ist,
- Figur 4: eine perspektivische Darstellung einer Ausführung mit Zusatzschneidschaufel im oberen Bereich des Grundkörpers,
- Figur 5: eine Ausführung, bei der an der Zusatzschneidschaufel ein senkrechter Ring befestigt ist,
- Figur 6: ein rohrförmiges Bohrfundament, welches im unteren Bereich konischen ausgeführt ist,
- Figur 7: eine Ausführungsform mit einem scheibenförmigen Stabilisierungselement,
- Figur 8: eine Ausführungsform mit einem rechteckigen Stabilisierungselement,
- Figur 9: ein Bohrfundament mit einer Schräglagenausgleichseinrichtung,
- Figur 10: ein Bohrfundament mit einer Schräglagenausgleichseinrichtung mittels Drehkeilen,
- Figur 11: ein Bohrfundament mit einem pyramidenförmigen erdnahen Bereich,
- Figur 12: eine Schneidschaufel mit eckigem Ausschnitt,
- Figur 13: ein erdnahes Ende des Grundkörpers mit konischen Bereichen
- Figur 14: eine Ausführung mit zusätzlichen Schneidhilfen am unteren Bereich des Grundkörpers,
- und Figur 15: eine Ausführung mitanpassbarem Anschluss.

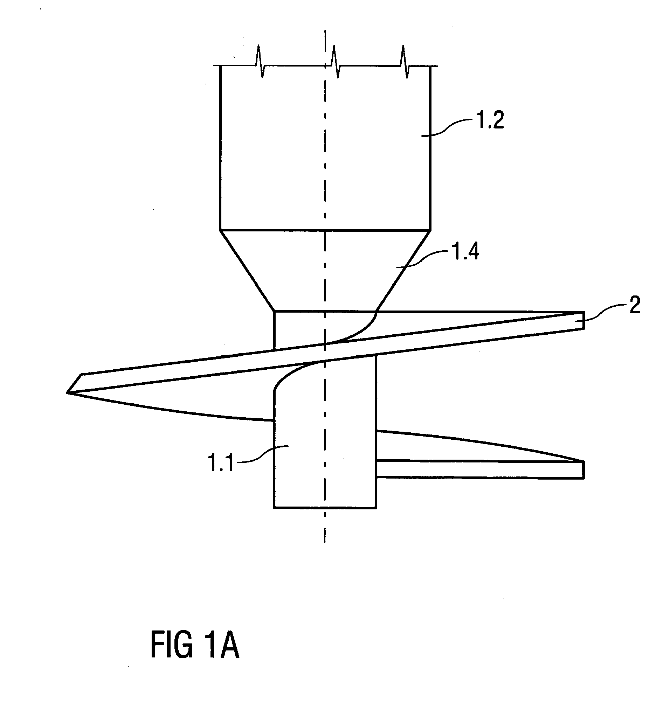

Bei der in **Figur 1A** dargestellten Ausführung ist die Schneidschaufel 2 am unteren zylindrischen Bereich 1.1 des Grundkörpers 1 angeschweißt. Im dargestellten Fall ist die Schneidschaufel 2 in Form einer einteiligen Wendel ausgeführt. Es ist jedoch auch möglich, die Schneidschaufeln als Schaufelsegmente anzubringen. Die Schneidschaufel 2 ist als geschmiedetes oder gegossenes Bauteil gefertigt und anschließend am Grundkörper 1 angeschweißt. Damit wird gewährleistet, dass die Steigung der Schneidschaufel 2 einen gleichmäßig konstanten Wert ausweist, sodass das Erdreich beim Eindrehen des Bohrfundamentes nicht gelockert wird. Durch die unterschiedlichen Durchmesser der zylindrischen Bereiche 1.1 und 1.2 wird das Eindrehen erleichtert und dennoch eine feste Pressung des oberen zylindrischen Bereiches 1.2 am Erdreich gesichert, da das Erdreich mit Hilfe des zwischen dem unteren Bereich 1.1 und dem oberen Bereich 1.2 angeordneten konischen Abschnitts 1.4 verdichtet wird. Der Grundkörper 1 ist rohrförmig ausgebildet und am unteren Ende offen. Er kann deshalb einen Teil des Erdreichs in seinem Inneren aufnehmen. Durch die Wahl des Verhältnisses der Durchmesser der beiden zylindrischen Bereiche 1.1 und 1.2 kann eine optimale Anpassung an die Sicherheit gegen Lockern und den erforderlichen Kraftaufwand beim Eindrehen für den jeweiligen Anwendungsfall erfolgen.

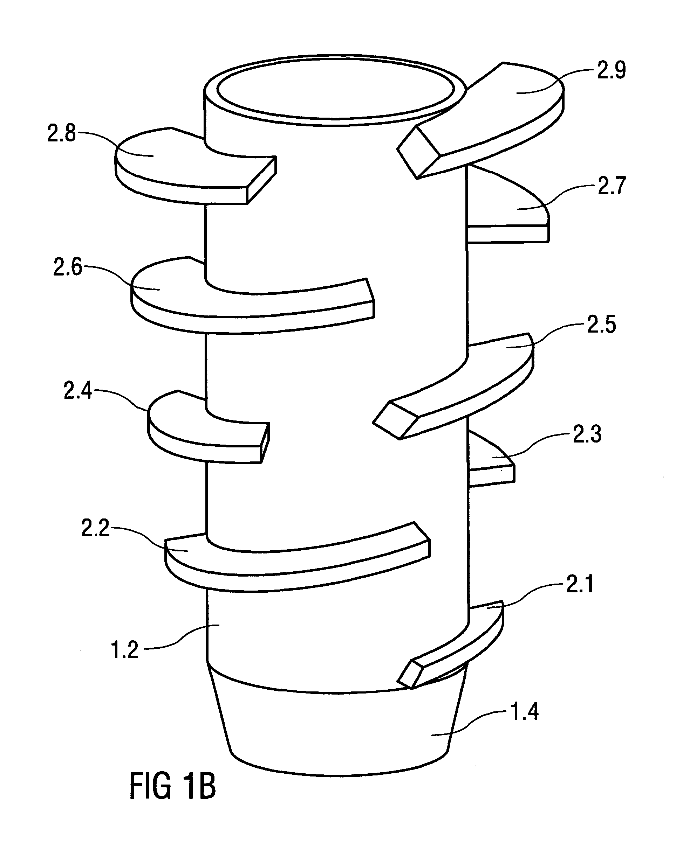

Die in **Figur 1B** gezeigte Variante erläutert eine Ausführung, bei der eine Mehrzahl von Schneidschaufeln 2.1 bis 2.9 am Grundkörper 1 angeordnet sind, der aus einem zylindrischen Rohrteil 1.2 mit einem darunter angeordneten konischen Bereich 1.4 besteht. Diese Ausführung ermöglicht ein besonders leichtes Einschrauben in das Erdreich, da hierbei im Rohrinneren das Material verbleiben kann, sodass beim Einschrauben des Bohrfundaments nur wenig Erdmaterial verdrängt werden muss. Das am unteren Ende des Rohres angebrachte kegelstumpfförmige Teilstück ermöglicht es, einen Teil des Erdreichs nach außen zu verdrängen und einen höheren radialen Anpressdruck zu erreichen, ohne dass das gesamte Material verdrängt werden muss.

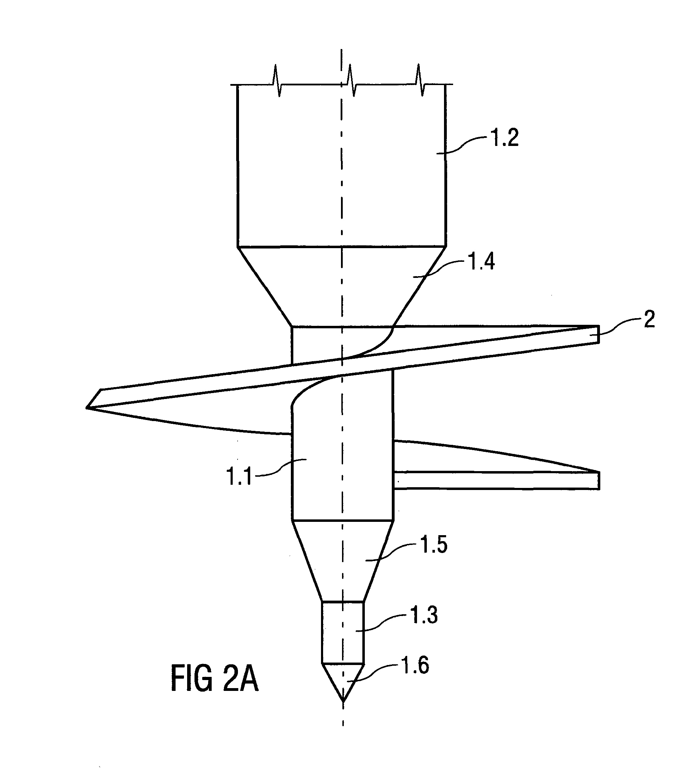

Bei der in **Figur 2A** dargestellten Ausführung weist der Grundkörper 1 einen unteren zylindrischen Bereich 1.3, einen mittleren zylindrischen Bereich 1.1 und einen darüber angeordneten weiteren zylindrischen Bereich 1.2 auf. Der untere zylindrische Bereich 1.3 hat den geringsten Durchmesser und der obere zylindrische Bereich 1.2 weist den größten Durchmesser auf. Zwischen den drei zylindrischen Bereichen 1.1 bis 1.3 befinden sich jeweils konische Bereiche 1.4 und 1.5. Der zylindrische Bereich 1.2 bildet den Schaft des Bohrfundamentes. Dieser Bereich ist üblicherweise als Rohr ausgeführt. Im unteren zylindrischen Bereich 1.3 ist am erdnahen Ende eine Bohrspitze 1.6 angebracht.

Eine vorteilhafte Ausgestaltung sieht vor, dass sich im Inneren des Grundkörpers 1 Mittel zur Erhöhung der Reibung befinden, die durch eine oder mehrere Öffnungen beim Eindrehen zwischen die Außenfläche des Grundkörpers 1 und das sich darum befindende Erdreich gebracht werden, sodass die Reibung an diesen Stellen verstärkt wird und die Sicherheit gegen ungewolltes Lockern erhöht wird.

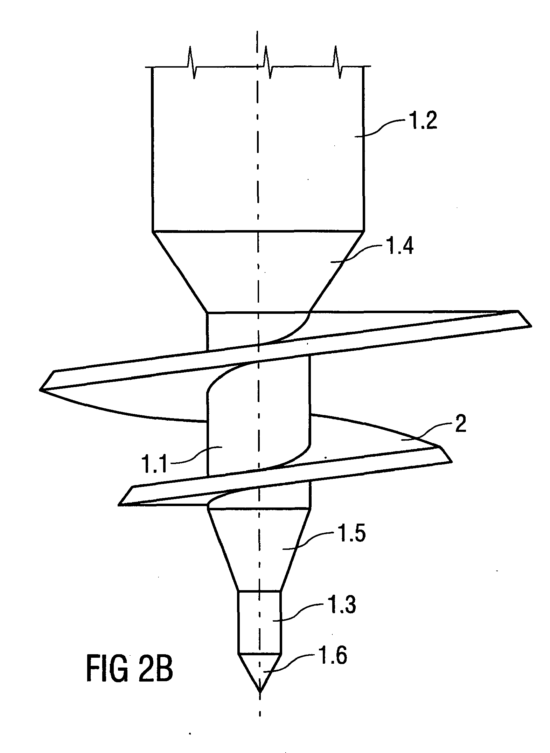

Eine vorteilhafte Ausgestaltung der Schneidschaufel 2 ist in **Figur 2B** dargestellt. Hierbei weist die im mittleren zylindrischen Bereich 1.1 angebrachte schraubenförmige Schneidschaufel 2 einen nach oben kontinuierlich wachsendem Durchmesser auf. Mit dieser Ausführung wird das Eindringen in das Erdreich erleichtert.

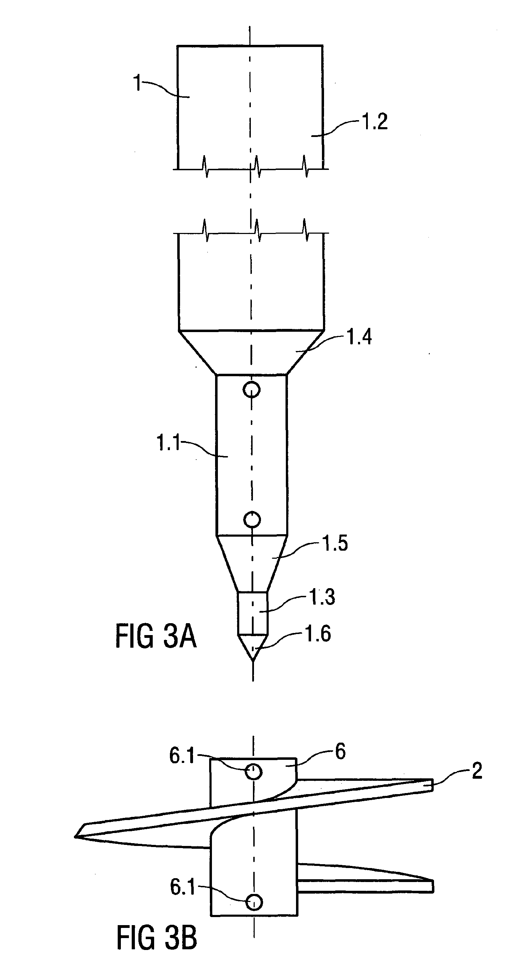

Bei der in **Figur 3** dargestellten Gestaltungsform ist eine als schraubenförmige Wendel ausgebildete Schneidschaufel 2 an einer Hülse 2.1 angeschweißt, die lösbar am Grundkörper 1 befestigt ist. Damit können in einfacher Weise verschiedene Schneidschaufeln 2 an einem Bohrfundament angebracht werden, sodass die Schneidschaufeln leicht an die jeweiligen Gegebenheiten angepasst werden können. Der in **Figur 3A** verwendete Grundkörper 1 entspricht dem in Figur 2 dargestellten. **Figur 3B** zeigt die Hülse 6. Die Befestigung der Hülse 6 am zylindrischen Bereich 1.1 erfolgt mit Hilfe von Befestigungsschrauben, die durch Befestigungslöcher 6.1 der Hülse 6 geführt sind.

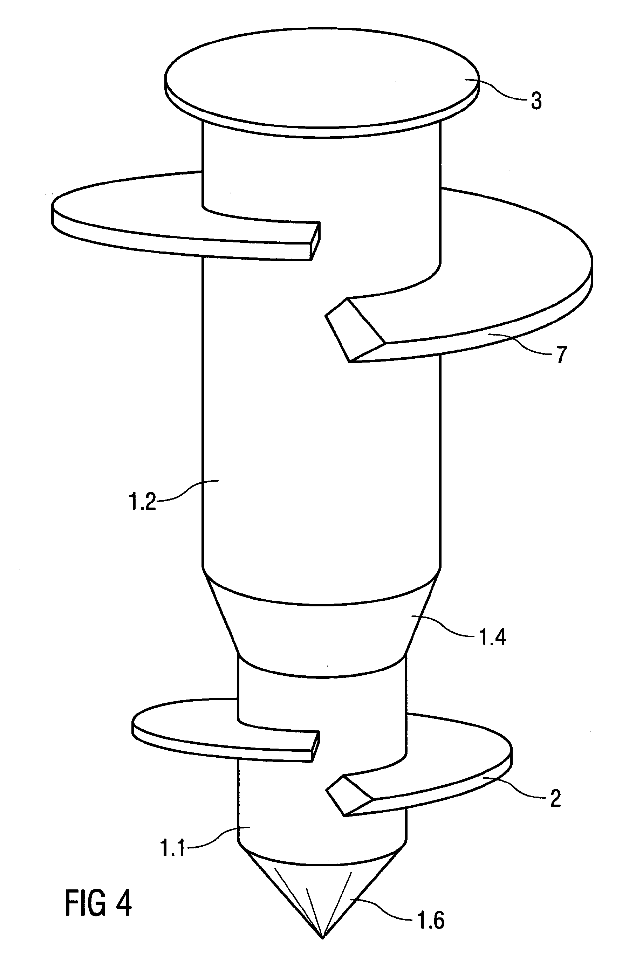

In **Figur 4** ist eine Anordnung dargestellt, bei der der Grundkörper 1 einen erdnahen zylindrischen Bereich 1.1 und einen darüber angeordneten weiteren zylindrischen Bereich 1.2 aufweist, dessen Durchmesser größer als der Durchmesser des erdnahen zylindrischen Bereichs 1.1 ist. Am erdnahen zylindrischen Bereich 1.1 ist die Schneidschaufel 2 angeschweißt. Der darüber gelegene zylindrische Bereich 1.2 bildet den Schaft des Bohrfundamentes. Dieser Bereich ist üblicherweise als Rohr ausgeführt. Am oberen Ende des Grundkörpers 1 befindet sich das Befestigungsteil 3, an dem die Aufbauten befestigt werden können. Etwas unterhalb des Befestigungsteils 3 ist die Zusatzschneidschaufel 7 am oberen zylindrischen Teil 1.2 des Grundkörpers angeschweißt. Die Zusatzschneidschaufel 7 ist mit einem deutlich größeren Außendurchmesser als die Schneidschaufel 2 versehen, um eine hohe Haftfestigkeit des Bohrfundamentes im Erdreich zu sichern. Die Zusatzschneidschaufel 7 weist die gleiche Steigung wie die am erdnäheren Bereich angebrachte Schneidschaufel 2 auf. Die Zusatzschneidschaufel 7 kann sowohl große horizontale als auch große vertikale Kräfte aufnehmen und damit hohe Belastungen der Aufbauten zulassen. Im unteren erdnahen Bereich 1.1 ist am unteren Ende eine Bohrspitze 1.6 angebracht. Eine vorteilhafte Ausführung sieht vor, die Zusatzschneidschaufel 7 an einer Hülse zu befestigen die am zylindrischen Bereich 1.2 verschoben und an einer wählbaren Position gesichert werden kann.

Der Grundkörper 1 kann ganz oder an seinen Außenflächen mit einer Beschichtung versehen sein. Die Beschichtung kann auch an den Schneidschaufeln 2 angebracht werden. Für die Beschichtung ist eine Pulverbeschichtung besonders geeignet.

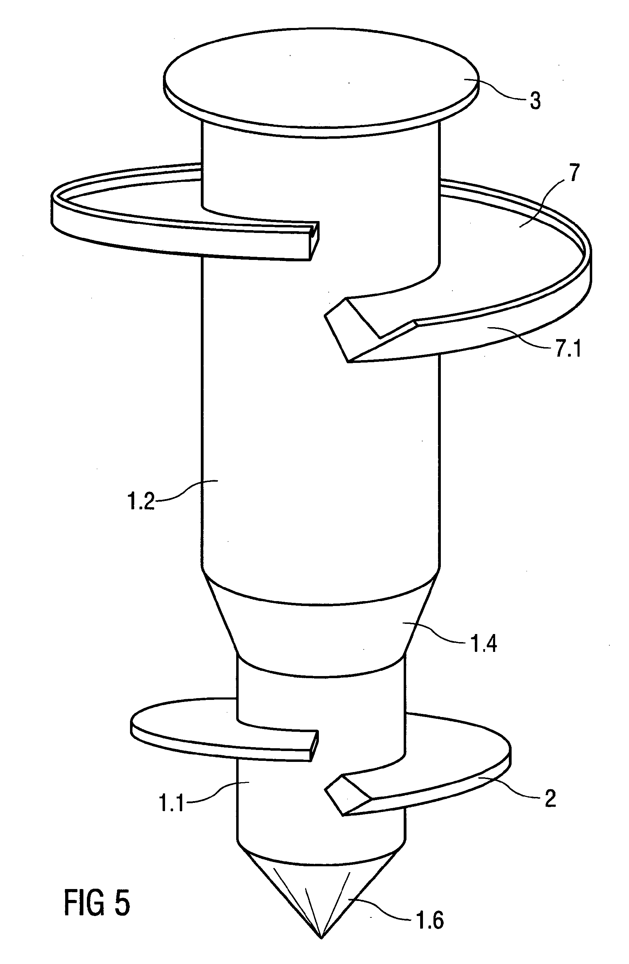

**Figur 5** zeigt eine Ausführung, bei der am äußeren Rand der Zusatzschneidschaufel 7 ein senkrechter Ring 7.1 angebracht ist, der im hier dargestellten Beispiel nach oben übersteht. Es ist auch möglich, dass der Ring 7.1 nach unten oder sowohl nach unten als auch nach oben übersteht. Ferner kann der Ring 7.1 auch aus einzelnen Segmenten bestehen.

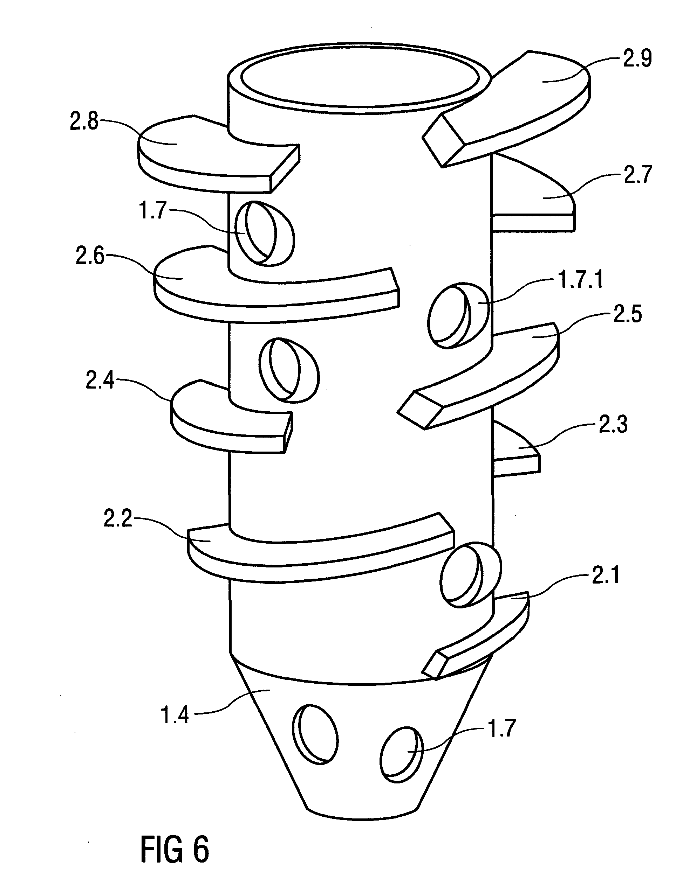

In **Figur 6** ist ein rohrförmiges Bohrfundament dargestellt, welches im unteren Bereich konischen ausgeführt ist. Der konische Bereich 1.4 ist mit seitlichen Öffnungen 1.7 versehen, die es ermöglichen, beim Einschrauben des Bohrfundaments einen Teil des verdrängten Erdreichs im Inneren des Rohres aufzunehmen. Damit erfolgt einerseits ein Verdrängen des Materials vom Zentrum nach außen, wodurch sich ein radialer Druck auf das Bohrfundament ergibt und damit ein fester Sitz des Bohrfundaments gewährleistet wird. Andererseits kann durch Anzahl und Größe der Öffnungen 1.7 ein gewisser Anteil des Erdreiches in das Rohr geführt werden, so dass nicht das gesamte Material verdrängt werden muss, was einen hohen Kraftbedarf beim Einschrauben erfordern würde. Damit kann eine Optimierung zwischen aufzubringender Kraft und Verankerungssicherheit erfolgen. Es ist auch möglich, dass die seitlichen Öffnungen mit herausstehenden Ausbuchtungen 1.7.1 versehen sind, um das Material aus dem Erdreich herauszuschneiden und in das Innere des Rohres zu führen.

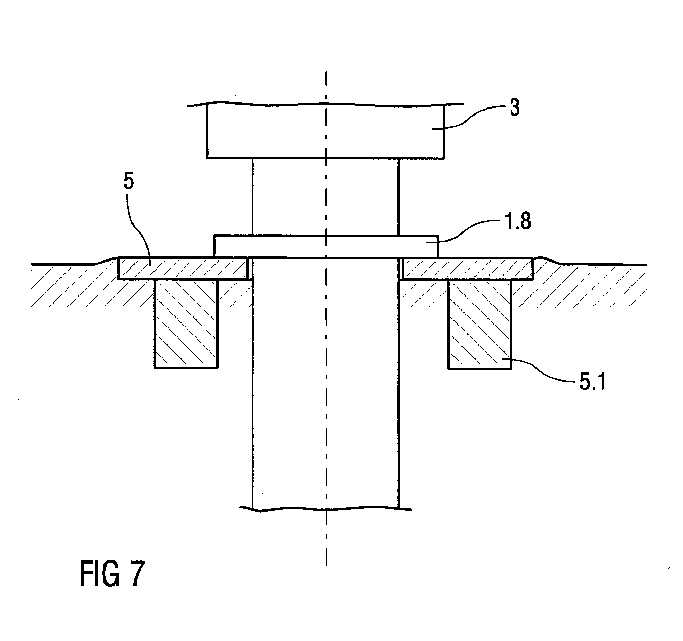

In **Figur 7** ist eine Ausführungsform dargestellt, mit der eine deutliche Erhöhung der Sicherheit gegen Lockern des Bohrfundamentes erreicht wird, was häufig durch wechselnde seitliche Beanspruchungen hervorgerufen wird. Am oberen Ende des Grundkörpers 1 ist an dessen Außenseite ein Haltering 1.8 angeschweißt. Unter dem Haltering 1.8 befindet sich ein Stabilisierungselement 5, das im dargestellten Beispiel von einer Scheibe gebildet wird, die mit einer zentralen Bohrung versehen ist. Der Durchmesser dieser Bohrung ist etwas größer als der Außendurchmesser des Grundkörpers 1, sodass dieser durch die Scheibe beim Einschrauben geführt werden kann. Er ist aber kleiner als der äußere Durchmesser des Halterings 1.8, sodass die Scheibe nach dem Einschrauben des Bohrfundaments fest auf den Boden gedrückt wird und eine hohe Sicherheit des Bohrfundaments gegen Lockern gewährleistet. Die Scheibe ist an ihrer Unterseite mit senkrechten, radial angeordneten Profilen 5.1 versehen, die sich beim Einschrauben des Fundamentes formschlüssig im Erdreich verankern.

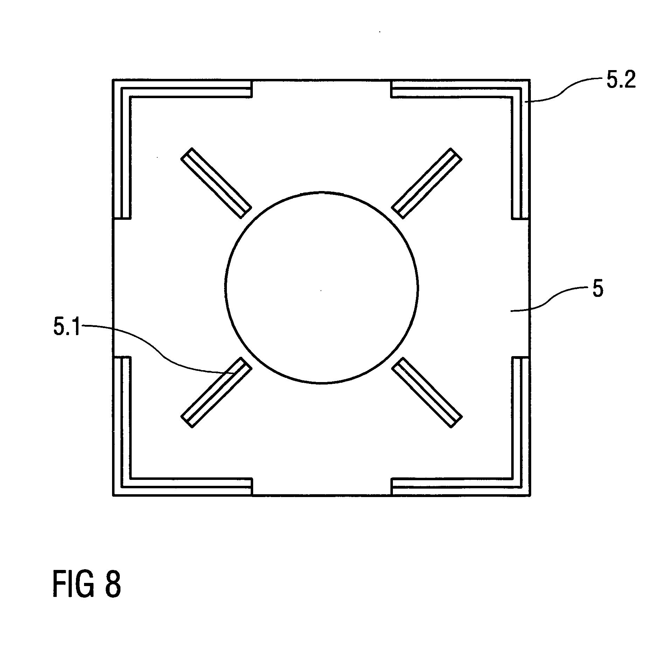

**Figur 8** zeigt eine weitere Gestaltungsmöglichkeit für das Stabilisierungselement 5. Die hier dargestellte Form besteht aus einer rechteckige Platte, an deren Unterseite vier radiale Profilstücke 5.1 sowie an den Ecken rechtwinklige Profilstücke 5.2 angebracht sind. Sowohl die radialen Profilstücke 5.1 als auch die rechtwinkligen Profilstücke 5.2 können an ihrer unteren Seite mit einer Schneide versehen sei, um das Eindringen in den Boden zu erleichtern.

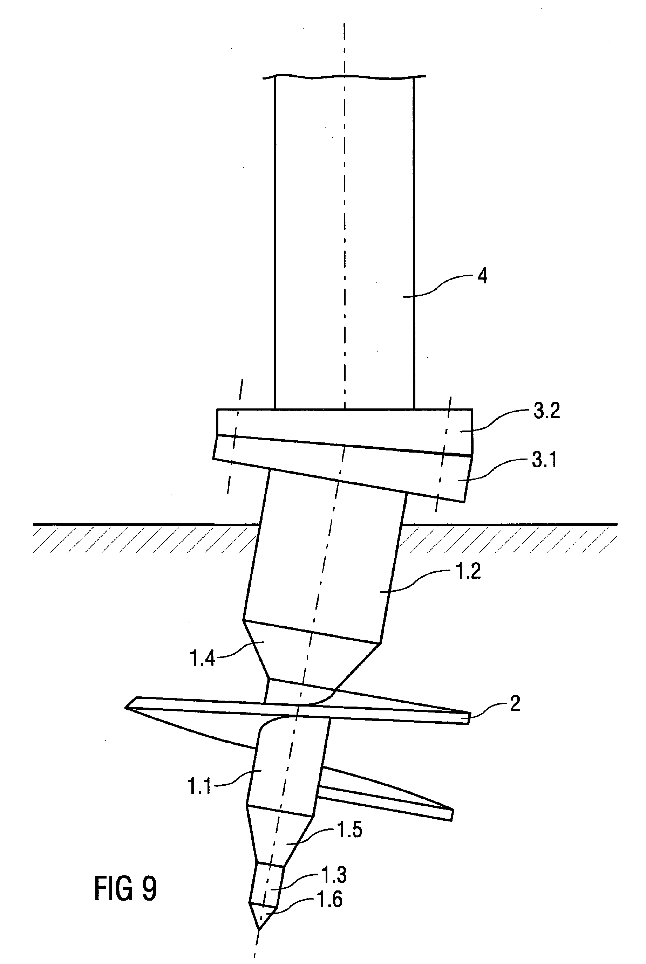

Die **Figur 9** zeigt eine Ausführung, mit der ein Ausgleich schräg eingebrachter Bohrfundamente ermöglicht wird. Bei inhomogenen Untergründen kommt es häufig vor, dass die Bohrfundamente beim Einschrauben verlaufen, sodass diese schräg im Boden stehen. Mit der dargestellten Anordnung kann ein darauf angebrachter Ständer so befestigt werden, dass er eine senkrechte Lage einnimmt. Hierzu befindet sich eine Befestigungseinrichtung 3 wischen dem oberen Bereich 1.3 des Bohrfundamentes und dem Aufsatzteil 4. Die Befestigungseinrichtung 3 besteht aus einem unteren Anschlussteil 3.1 und einem oberen Anschlussteil 3.2, die als Drehkeile ausgebildet sind. Die Drehkeile sind hier als Flansche fest mit dem oberen Bereich 1.3 des Bohrfundamentes und dem Aufbau 4 verbunden. Damit können die Anschlussteile 3.1 und 3.2 so gegeneinander verdreht werden, dass eine senkrechte Lage des Aufsatzteils 4 erreicht wird. Nach dem Ausrichten werden die Anschlussteile 3.1 und 3.2 mittels Schraubverbindungen gesichert.

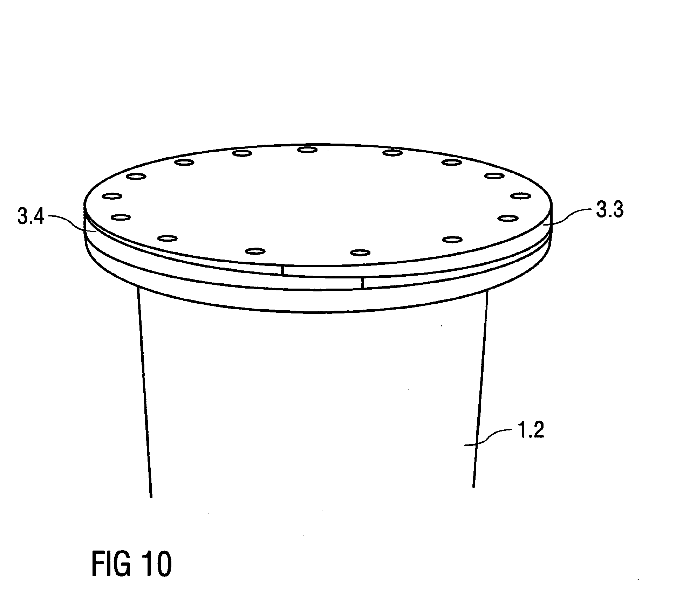

Eine weitere Möglichkeit zum Ausgleich schräg eingebrachter Bohrfundamente ist in **Figur 10** dargestellt. Hierbei sind Drehkeile 3.3 und 3.4 als gesonderte Zwischenteile angeordnet. Diese Anordnung ermöglicht es, auf einem schräg im Erdreich eingebrachten Bohrfundament ein Aufsatzteil in beliebiger Drehlage um eine senkrechte Achse auszurichten.

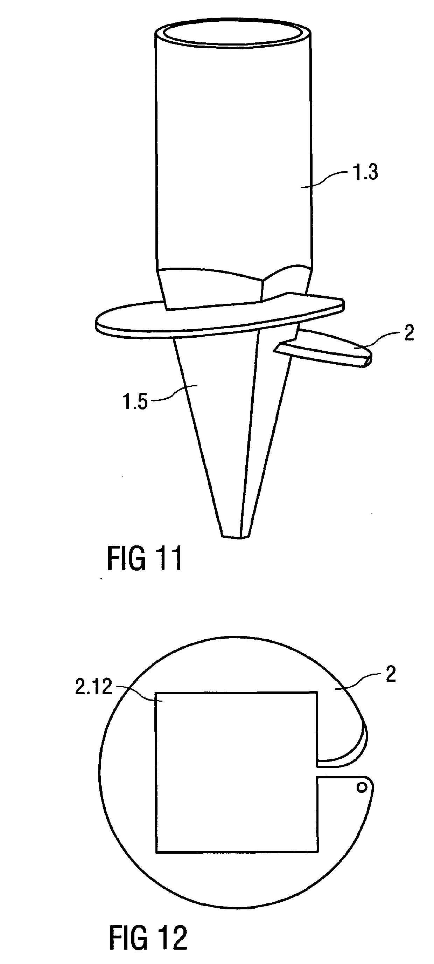

Bei der in **Figur 11** dargestellten Ausführung ist das Bohrfundament im erdnahen Bereich pyramidenförmig ausgebildet. Im dargestellten Beispiel weist der pyramidenförmige Bereich 1.5 einen quadratischen Querschnitt auf. Es sind jedoch auch andere vieleckige Querschnittsformen möglich.

Eine für die in Figur 11 erläutere Ausführung geeignete Schneidschaufel 2 zeigt **Figur 12**. Die Schneidschaufel 2 weist einen dem pyramidenförmigen Bereich 1.5 des Grundkörpers entsprechenden Durchbruch auf. Damit sind Schneidschaufel 2 und Grundkörper 1 sowohl in Drehrichtung als auch in senkrechter Fügerichtung formschlüssig verbunden, sodass hohe Kräfte sicher übertragen werden können und eine einfache Montage ermöglicht wird.

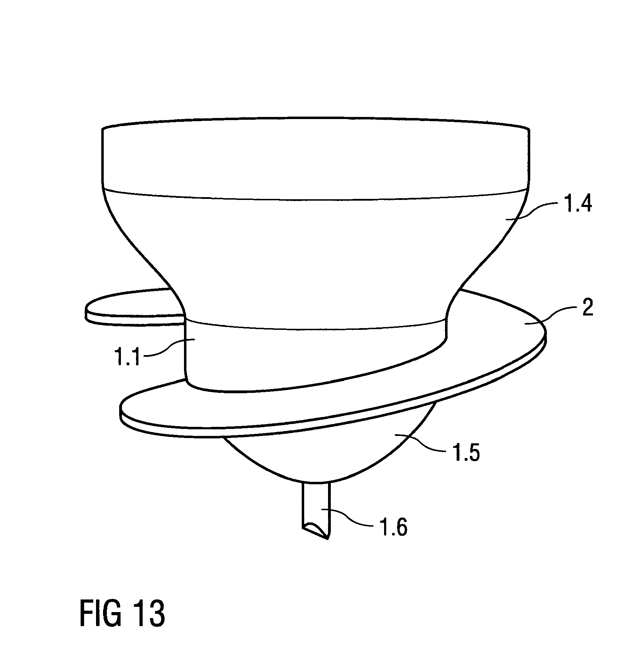

**Figur 13** zeigt eine Ausführung des erdnahen Endes des Grundkörpers 1 an dem zwei sich verjüngende Bereiche 1.4 und 1.5 angearbeitet sind.

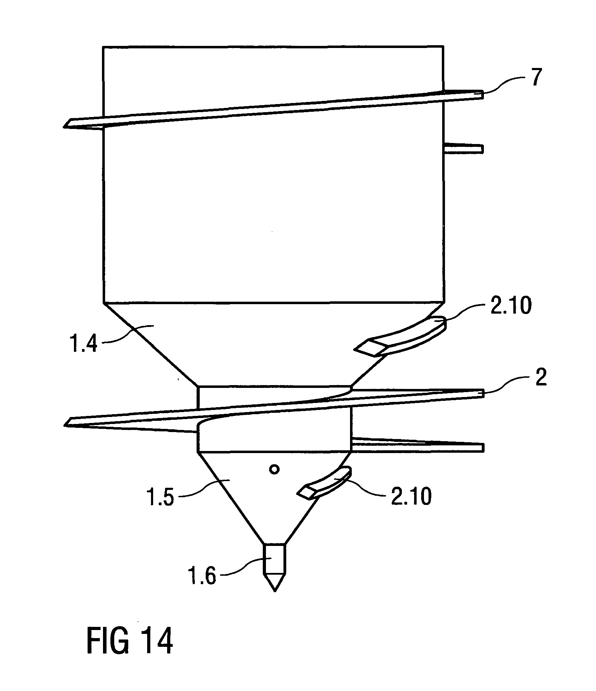

Bei der in **Figur 14** dargestellten Ausführung sind an den konischen Bereichen 1.4 und 1.5 zusätzliche Hilfsschneidschaufel 2.10 angebracht, die das Einbringen der sich vor den Schneidschaufeln 2 befindenden Abschnitte des Grundkörpers erleichtern.

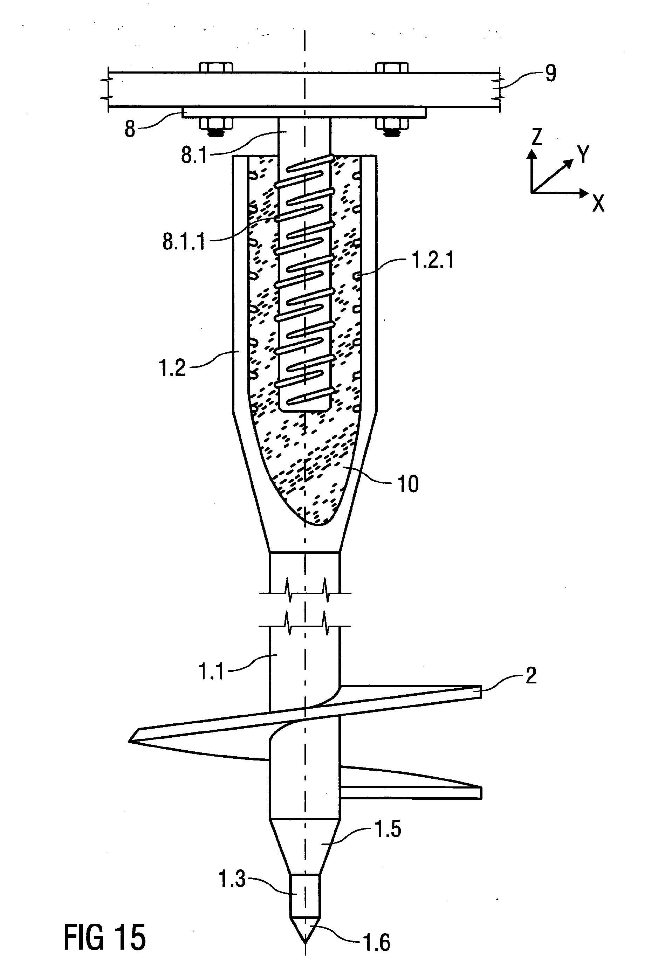

In **Figur 15** ist eine Ausführung dargestellt, die das Ausrichten von Aufbauten in mehreren Richtungen ermöglicht. Hierzu ist in den oberen zylindrischen Bereich 1.2 des Grundkörpers 1 eine Füllung 10 aus einem aushärtbares Material eingebracht. Beispielsweise kann hierzu Beton oder Kunstharz verwendet werden. In diesem Material wird vor dessen Aushärten der vorgesehene Aufbau eingebracht und ausgerichtet. Das Ausrichten kann dazu sowohl durch Verschieben in den drei linearen Richtungen x, y und z, als auch durch Kippen um beliebige Achsen erfolgen. Im dargestellten Beispiel ist hierzu ist ein Träger 9 vorgesehen, an dem der beabsichtigte Aufbau befestigt wird. Der Träger 9 ist an einem Zwischenträger 8 befestigt, an dem ein Zapfen 8.1 angeordnet ist, welcher vor dem Aushärten des aushärtbaren Materials in dieses eingebracht und dort ausgerichtet wurde. Zu Sicherung gegen ungewoltes Lösen sind am Zapfen 8.1 Verankerungen 8.1.1 und am zylindrischen Bereich 1.2 des Grundkörpers 1 weitere Verankerungen 1.2.1 angebracht. Der obere zylindrische Bereich 1.2 des Grundkörpers 1 wird in der Regel mit einem größeren Durchmesser als die darunter angeordneten Bereiche ausgeführt. Eine vorteilhafte Ausführung sieht vor, den oberen zylindrischen Bereich 1.2 lösbar, zum Beispiel mit einer Schraubverbindung, mit dem darunter angeordneten Bereich zu verbinden. Ferner ist es möglich, dass der Zwischenträger 8 nicht durch Einbetten in eine Füllung 10 befestigt wird, sondern durch eine beliebige mechanische Verbindung gesichert wird.

### BEZUGSZEICHENLISTE

- 1: Grundkörper
- 1.1: unterer zylindrischer Bereich
- 1.2: oberer zylindrischer Bereich
- 1.2.1: Verankerungen
- 1.3: erdnaher zylindrischer Bereich
- 1.4: oberer konischer Bereich
- 1.5: unterer konischer/pyramidenförmiger Bereich
- 1.6: Bohrspitze
- 1.7: Seitliche Öffnung
- 1.7.1: herausstehende Ausbuchtung
- 1.8: Haltering
- 2: Schneidschaufel
- 2.1 ... 2.9: Schneidschaufelsegmente
- 2.10: Hilfsschneidschaufel
- 2.12: Durchbruch
- 3: Befestigungseinrichtung
- 3.1: unteres Anschlussteil
- 3.2: oberes Anschlussteil
- 3.3, 3.4: Drehkeile
- 4: Aufsatzteil
- 5: Stabilisierungselement
- 5.1: radiales Profilstück
- 5.2: äußeres Profilstück
- 6: Hülse
- 6.1: Befestigungslöcher
- 7: Zusatzschneidschaufel
- 7.1: Ring
- 8: Zwischenträger
- 8.1: Zapfen
- 8.1.1: Verankerungen
- 9: Träger
- 10: Füllung

## Patentansprüche

1. Bohrfundament zum Verankern von Bauteilen im Erdboden, welches einen Grundkörper (1) mit mindestens einem zylindrischen Bereich (1.2) und mindestens eine Vortrieb erzeugende Schneidschaufel (2) aufweist, wobei der Grundkörper (1) mindestens zwei zylindrische Bereiche (1.1, 1.2,) mit unterschiedlichen Durchmessern enthält, wobei zwischen einem unteren Bereich (1.1) und einem oberen Bereich (1.2) ein konischer Abschnitts (1.4) angeordnet ist, der erdnähere Bereich (1.1) einen geringeren Durchmesser aufweist und die mindestens eine Vortrieb erzeugende durch Schmieden oder einem Gussverfahren hergestellte Schneidschaufel (2) am erdnäheren Bereich (1.1) angebracht ist und eine gleichmäßige Steigung aufweist.

2. Bohrfundament nach Anspruch 1, **dadurch gekennzeichnet, dass** die Vorschub erzeugende Schneidschaufel (2) aus mehreren Einzel-Schneidschaufeln (2.1 ... 2.7) besteht, welche aus Segmenten bestehen, die auf einer Gewindesteigung oder in einer Höhe nebeneinander angeordnet sind.

3. Bohrfundament nach einem der vorhergehenden Ansprüche, **dadurch gekennzeichnet, dass** die mindestens eine Vortrieb erzeugende Schneidschaufel (2) an einer Hülse (6) angebracht ist, welche lösbar mit dem Grundkörper (1) des Bohrfundamentes verbunden ist.

4. Bohrfundament nach einem der vorhergehenden Ansprüche, **dadurch gekennzeichnet, dass** am oberen Bereich des Grundkörpers (1) mindestens eine Zusatzschneidschaufel (7) angebracht ist, wobei die Zusatzschneidschaufel (7) einen größeren Außendurchmesser, aber die gleiche Steigung wie die am erdnäheren Bereich (1.1) angebrachte Schneidschaufel (2) aufweist.

5. Bohrfundament nach einem der vorhergehenden Ansprüche, **dadurch gekennzeichnet, dass** der Grundköper (1) des Bohrfundamentes aus einem Rohr besteht, an dem die Schneidschaufel (2) und die Zusatzschneidschaufel (7) angebracht sind.

6. Bohrfundament nach Anspruch 5, **dadurch gekennzeichnet, dass** im Inneren des Grundkörpers (1) eine Hilfsstange angeordnet ist, welche am endseitigen Ende des Grundköpers (1) lösbar befestigt ist und aus dem oberen Ende des Grundköpers (1) herausragt.

7. Bohrfundament nach einem der Ansprüche 1 bis 6, **dadurch gekennzeichnet, dass** der Grundkörper (1) drei zylindrische Bereiche (1.1, 1.2, 1.3) mit unterschiedlichen Durchmessern enthält, wobei ein erdnächster Bereich (1.3) den geringsten Durchmesser aufweist und die mindestens eine Vortrieb erzeugende Schneidschaufel (2) am mittleren Bereich (1.1) angebracht ist.

8. Bohrfundament nach einem der vorhergehenden Ansprüche, **dadurch gekennzeichnet, dass** am erdseitigen Ende des Grundköpers (1) eine Bohrspitze (1.6) angebracht ist.

9. Bohrfundament nach einem der vorhergehenden Ansprüche, **dadurch gekennzeichnet, dass** der Grundkörper (1) rohrförmige Teilbereiche aufweist, an denen seitliche Öffnungen (1.7) angebracht sind.

10. Bohrfundament nach einem der vorhergehenden Ansprüche, **dadurch gekennzeichnet, dass** der Grundkörper (1) und/oder die Schneidschaufeln mit einer Beschichtung versehen ist/sind.

11. Bohrfundament nach einem der vorhergehenden Ansprüche, **dadurch gekennzeichnet, dass** sich im Grundkörper (1) Mittel zur Erhöhung der Reibung befinden, die durch eine oder mehrere seitliche Öffnungen (1.7) beim Eindrehen zwischen die Außenfläche des Bohrfundamentes und das sich darum befindende Erdreich gebracht werden.

12. Bohrfundament nach einem der vorhergehenden Ansprüche, **dadurch gekennzeichnet, dass** der erdnahen Bereich (1.5) pyramidenförmig ausgebildet ist und die Schneidschaufel (2) einen dem pyramidenförmigen Bereich (1.5) des Grundkörpers (1) entsprechenden Durchbruch aufweist.

13. Bohrfundament nach einem der vorhergehenden Ansprüche, **dadurch gekennzeichnet, dass** an den konischen Bereichen (1.4, 1.5) zusätzliche Hilfsschneidschaufel (2.10) angebracht sind.

14. Bohrfundament nach einem der vorhergehenden Ansprüche, **dadurch gekennzeichnet, dass** im oberen zylindrischen Bereich (1.2) des Grundkörpers (1) eine Füllung (10) aus einem aushärtbares Material eingebracht ist, in welcher ein Träger (9) mittelbar oder unmittelbar befestigt ist.

## Claims

1. Drilled foundation for anchoring structural components in the ground, said drilled foundation having a main body (1) having at least one cylindrical region (1.2) and at least one cutting blade (2) that produces an advancing movement, wherein the main body (1) contains at least two cylindrical regions (1.1, 1.2) having different diameters, wherein a conical section (1.4) is arranged between a lower region (1.1) and an upper region (1.2), the region (1.1) closer to the ground has a smaller diameter and the at least one cutting blade (2) that produces an advancing movement and is produced by forging or a casting process is attached to the region (1.1) closer to the ground and has a regular pitch.

2. Drilled foundation according to Claim 1, **characterized in that** the cutting blade (2) that produces an advancing movement consists of a plurality of individual cutting blades (2.1 ... 2.7) which consist of segments that are arranged alongside one another on a thread pitch or at one height.

3. Drilled foundation according to either of the preceding claims, **characterized in that** the at least one cutting blade (2) that produces an advancing movement is attached to a sleeve (6) which is connected detachably to the main body (1) of the drilled foundation.

4. Drilled foundation according to one of the preceding claims, **characterized in that** at least one additional cutting blade (7) is attached in the upper region of the main body (1), wherein the additional cutting blade (7) has a larger outside diameter than but the same pitch as the cutting blade (2) attached to the region (1.1) closer to the ground.

5. Drilled foundation according to one of the preceding claims, **characterized in that** the main body (1) of the drilled foundation consists of a tube to which the cutting blade (2) and the additional cutting blade (7) are attached.

6. Drilled foundation according to Claim 5, **characterized in that** an auxiliary rod is arranged in the interior of the main body (1), said auxiliary rod being secured detachably to the terminal end of the main body (1) and projecting out of the upper end of the main body (1).

7. Drilled foundation according to one of Claims 1 to 6, **characterized in that** the main body (1) contains three cylindrical regions (1.1, 1.2, 1.3) having different diameters, wherein a region (1.3) closest to the ground has the smallest diameter and the at least one cutting blade (2) that produces an advancing movement is attached to the central region (1.1).

8. Drilled foundation according to one of the preceding claims, **characterized in that** a drive point (1.6) is attached to the ground-side end of the main body (1).

9. Drilled foundation according to one of the preceding claims, **characterized in that** the main body (1) has tubular subregions in which lateral openings (1.7) are provided.

10. Drilled foundation according to one of the preceding claims, **characterized in that** the main body (1) and/or the cutting blades is/are provided with a coating.

11. Drilled foundation according to one of the preceding claims, **characterized in that** means for increasing friction are located in the main body (1), said means being brought into position between the outer surface of the drilled foundation and the ground located around the latter through one or more lateral openings (1.7) during screwing in.

12. Drilled foundation according to one of the preceding claims, **characterized in that** the region (1.5) close to the ground is configured in a pyramid-shaped manner and the cutting blade (2) has an aperture corresponding to the pyramid-shaped region (1.5) of the main body (1).

13. Drilled foundation according to one of the preceding claims, **characterized in that** additional auxiliary cutting blades (2.10) are attached to the conical regions (1.4, 1.5).

14. Drilled foundation according to one of the preceding claims, **characterized in that** a filling (10) composed of curable material is introduced in the upper cylindrical region (1.2) of the main body (1), a beam (9) being secured indirectly or directly in said filling (10).

## Revendications

1. Fondation forée pour ancrer des pièces dans le sol, laquelle présente un corps de base (1) avec au moins une partie cylindrique (1.2) et au moins une pale de coupe (2) produisant une avancée, le corps de base (1) contenant au moins deux parties cylindriques (1.1, 1.2) de diamètres différents, entre une partie inférieure (1.1) et une partie supérieure (1.2) étant disposée une section conique (1.4), la partie (1.1) plus proche du sol présentant un diamètre plus faible et l'au moins une pale de coupe (2) produisant une avancée, fabriquée par forgeage ou coulée, étant placée sur la partie (1.1) plus proche du sol et présentant une pente égale.

2. Fondation forée selon la revendication 1, **caractérisée en ce que** la pale de coupe (2) produisant une avancée est constituée de plusieurs pales de coupe individuelles (2.1... 2.7), constituées de segments qui sont disposés l'un à côté de l'autre sur un pas de filetage ou à une certaine hauteur.

3. Fondation forée selon l'une des revendications précédentes, **caractérisée en ce que** l'au moins une pale de coupe (2) produisant une avancée est placée sur un manchon (6) qui est relié de façon séparable au corps de base (1) de la fondation forée.

4. Fondation forée selon l'une des revendications précédentes, **caractérisée en ce qu'**au moins une pale de coupe supplémentaire (7) est placée sur la partie supérieure du corps de base (1), la pale de coupe supplémentaire (7) présentant un diamètre extérieur plus grand mais la même pente que la pale de coupe (2) placée sur la partie (1.1) plus proche du sol.

5. Fondation forée selon l'une des revendications précédentes, **caractérisée en ce que** le corps de base (1) de la fondation forée est constitué d'un tube sur lequel la pale de coupe (2) et la pale de coupe supplémentaire (7) sont placées.

6. Fondation forée selon la revendication 5, **caractérisée en ce qu'**une barre auxiliaire est disposée à l'intérieur du corps de base (1), laquelle est fixée de façon séparable à l'extrémité côté extrémité du corps de base (1) et fait saillie de l'extrémité supérieure du corps de base (1).

7. Fondation forée selon l'une des revendications 1 à 6, **caractérisée en ce que** le corps de base (1) contient trois parties cylindriques (1.1, 1.2, 1.3) de différents diamètres, une partie la plus proche du sol (1.3) présentant le diamètre le plus faible et l'au moins une pale de coupe (2) produisant une avancée étant placée sur la partie centrale (1.1).

8. Fondation forée selon l'une des revendications précédentes, **caractérisée en ce qu'**une pointe de forage (1.6) est placée sur l'extrémité côté sol du corps de base (1).

9. Fondation forée selon l'une des revendications précédentes, **caractérisée en ce que** le corps de base (1) présente des parties tubulaires sur lesquelles sont placées des ouvertures latérales (1.7).

10. Fondation forée selon l'une des revendications précédentes, **caractérisée en ce que** le corps de base (1) et/ou les pales de coupe est/sont doté(e)(s) d'un revêtement.

11. Fondation forée selon l'une des revendications précédentes, **caractérisée en ce que** des moyens pour augmenter le frottement se trouvent dans le corps de base (1), lesquels sont insérés par une ou plusieurs ouverture(s) latérale(s) (1.7) lors du vissage entre la surface extérieure de la fondation forée et le sol se trouvant autour.

12. Fondation forée selon l'une des revendications précédentes, **caractérisée en ce que** la partie proche du sol (1.5) est pyramidale et que la pale de coupe (2) présente un passage correspondant à la partie pyramidale (1.5) du corps de base (1).

13. Fondation forée selon l'une des revendications précédentes, **caractérisée en ce que** des pales de coupe auxiliaires supplémentaires (2.10) sont placées sur les parties coniques (1.4, 1.5).

14. Fondation forée selon l'une des revendications précédentes, **caractérisée en ce qu'**un garnissage (10) en matériau durcissable par vieillissement est intégré dans la partie cylindrique supérieure (1.2) du corps de base (1), dans lequel un support (9) est fixé directement ou indirectement.
